# EUROPEAN PATENT APPLICATION

(11) **EP 3 838 087 A1**
(43) Date of publication of application: **23.06.2021**
(21) Application number: 20386057.2
(22) Date of filing: 16.12.2020
(51) Int. Cl.: A47J 37/06, A47J 37/08

(54) **HEAT SHIELD FOR TOASTERS AND SANDWICH MAKERS WITH PLASTIC SHELL**

(30) Priority: 18.12.2019 GR 20190100563
(71) Applicant: Emis L.T.D., 2850 Petrich (BG)
(72) Inventor: Mavridis, Vasileios, 19600 Mandra Attikis (GR)

(57) **Abstract**

The invention relates to a heat shield for heating appliances with plastic shell. The appliances have resistors (1) and above them an internal reflector (4), which reflects the heat escaping from the hotplate (2) to the outer shell (3) of the appliance. Installing a heat shield (6) in the internal part of the outer shell (3) prevents heat from escaping, thus reducing the external temperature of the surfaces with which the user comes into contact while uniformly distributing the heat in the hotplate (2).

## Description

### FIELD OF ART

The invention relates to the field of art of human needs and specifically to home and professional appliances and more specifically to kitchen appliances and in particular to toasters and sandwich makers. It specifically refers to a heat shield for these devices, which have a plastic shell.

### BACKGROUND OF THE INVENTION

The heat shield disclosed in the present invention for toasters and sandwich makers with plastic shell has not been disclosed in the prior art.

The current market trend is the presence of reduced outside temperatures on heating appliances and for this reason various devices have been invented. For example, there is the no. 1007264 patent relating to a heat reflecting assembly. With the development of art, the requirements increase and the efforts to reduce the temperature on the external surfaces of heating devices, such as toasters and sandwich makers, develop. The biggest problem to date in heating appliances is the fact that heat is always directed upwards, making the upper surfaces particularly dangerous for burns.

Current specifications, recognizing the difficulty of reducing the external temperatures, have acknowledged as acceptable for the upper part of these devices a temperature twice as high as the limit initially set. However, consumer associations are pushing for the limits to be reinstated to the original limits, without doubling.

It is thus an object of the present invention to address the aforementioned disadvantages and shortcomings of prior art by proposing a heat shield for heating appliances, namely toasters and sandwich makers with plastic shell.

It is a further object of the present invention to provide a heat shield for toasters and sandwich makers with a plastic shell, which has a mirror shape to re-emit heat to the appliance plate.

A further object of the present invention is to provide a heat shield for plastic shell heating appliances, which ensures reduction of shell temperatures.

A further advantage of the invention with a view to making useful the heat shield is the energy saving and the overall reduction of the energy footprint from the use of heating appliances.

A further advantage of the invention is the fact that a better and faster toasting effect is achieved, since heat losses, which otherwise would be diffused into the environment, are reduced.

Another object of the invention is to provide a heat shield which achieves uniform heat distribution in the hotplate of the heat appliances.

These and other objects, features and advantages of the invention will become apparent in the following detailed description.

### BRIEF DESCRIPTION OF THE DRAWINGS

The invention will become apparent to those skilled in the art with reference to the accompanying drawings in which it is illustrated in an illustrative, non-limiting manner.
Figure 1 shows the top of a heat appliance.
Figure 2 shows the front face of a heat appliance, with a heat shield to reduce the temperature of the upper surface thereof.
Figure 3 is a side view of the heat appliance with the heat shield provided by the invention.

### DETAILED DESCRIPTION OF A PREFERRED EMBODIMENT

Referring now to the accompanying drawings, we will describe indicative embodiments of the heat shield for toasters and sandwich makers with a plastic shell.

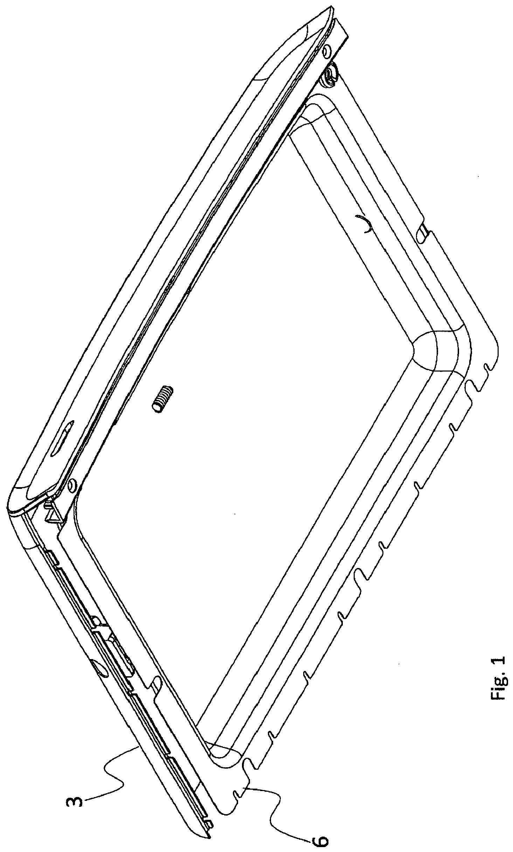

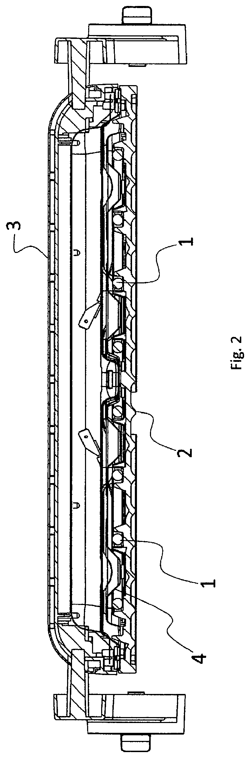

As is well known, the heat generated by the at least one thermal resistor (1), Fig. 2, of heat appliances, such as toasters and sandwich makers, is always directed upwards, thus concentrating at the top of the appliance. As a result, in addition to the heat emitted to the hotplate (2), a significant percentage of heat is also emitted to the outer shell (3), Fig. 1, of the appliance, resulting in a temperature increase thereof. On the other hand, this heat is essentially an energy loss since there is no real use of it for toasting.

These heat appliances have an internal reflector (4), which is located above the resistors (1) and which aims to reflect much of the energy of the resistance to the hotplate (2). This does not mean, however, that a significant amount of heat does not escape to the outer shell (3) of the appliance. Moreover, due to the increase of temperature of the inner reflector (4), a significant part of the heat is emitted again to the outer shell (3) of the device. The presence of an additional external reflector (5) contributes, but does not prevent the excess heat from escaping to the external part of the device. The presence of an internal reflector (4) and an external reflector (5) in these devices ensures that a large percentage of heat is trapped inside the device, ensuring the uniform toasting of the sandwich.

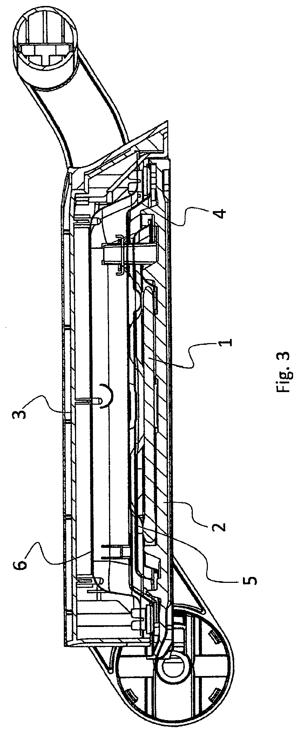

The addition of a heat shield (6), Fig. 3, which is surrounded by the outer shell (3) of the appliance, essentially prevents any heat leakage, pushing it to the inside of the appliance, which is advantageous for toasting. The shape of the heat shield (6) is advantageously hollow, so that it covers a large part in the inner part of the outer shell (3) and reflects the escaping radiation from the inner reflector (4) to the hotplate (2). Alternatively, of course, it can be flat, without showing a cavity, or it can have a concave shape in some of its parts. It may therefore be concave in the front and lateral portions of the outer shell (3) or in two of its four portions or even in only one of these portions. The heat shield (6) is made of a metal, suitable for use in applications where high temperatures develop.

It should be noted at this point that the description of the invention has been made with reference to illustrative examples, without being limited thereto. Therefore any change or modification in terms of shape, dimensions, morphology, materials used and construction and assembly components, as long as they are not a new inventive step and do not contribute to the technical development of what is already known, are considered to be contained in the purposes and aspects of the present invention.

## Claims

1. A metal heat shield for toasters and sandwich makers with plastic cover, mounted on the internal part of the outer shell (3) of a device having a hotplate (2) with resistors (1) above which an internal reflector (4) is located, **characterized in that** the heat shield (6) reflects the escaping radiation from the internal reflector (4) to the plate (2).

2. The heat shield for toasters and sandwich makers with plastic cover according to Claim 1, **characterized in that** the heat shield (6) is concave.

3. The heat shield for plastic shell toast and sandwich makers according to Claim 1, **characterized in that** the heat shield (6) is flat.
